(19) **Europäisches Patentamt**
**European Patent Office**
**Office européen des brevets**

(11) **EP 2 550 316 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**14.11.2018 Patentblatt 2018/46**

(45) Hinweis auf die Patenterteilung:
**23.09.2015 Patentblatt 2015/39**

(21) Anmeldenummer: **11709147.0**

(22) Anmeldetag: **22.03.2011**

(51) Int Cl.:
*C08J 3/12* (2006.01)    *B01J 2/30* (2006.01)
*B29B 9/16* (2006.01)

(86) Internationale Anmeldenummer:
**PCT/EP2011/054358**

(87) Internationale Veröffentlichungsnummer:
**WO 2011/117245 (29.09.2011 Gazette 2011/39)**

(54) **VERFAHREN ZUR HERSTELLUNG WASSERABSORBIERENDER POLYMERPARTIKEL**

METHOD FOR PRODUCING WATER-ABSORBING POLYMER PARTICLES

PROCÉDÉ DE PRODUCTION DE PARTICULES POLYMÈRES ABSORBANT L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010 EP 10157686**

(43) Veröffentlichungstag der Anmeldung:
**30.01.2013 Patentblatt 2013/05**

(73) Patentinhaber: **BASF SE**
**67056 Ludwigshafen am Rhein (DE)**

(72) Erfinder:
• **FUNK, Rüdiger**
**65527 Niedernhausen (DE)**

• **PFEIFFER, Thomas**
**67459 Böhl-Iggelheim (DE)**

(74) Vertreter: **BASF IP Association**
**BASF SE**
**G-FLP-C006**
**67056 Ludwigshafen (DE)**

(56) Entgegenhaltungen:
**WO-A1-2008/110524     WO-A1-2008/113790**
**WO-A2-2008/113788     DE-A1- 10 249 821**
**DE-A1- 10 249 822**

EP 2 550 316 B2

**Beschreibung**

Die vorliegende Erfindung betrifft ein Verfahren zur Herstellung wasserabsorbierender Polymerpartikel, wobei erwärmte wasserabsorbierende Polymerpartikel in einem schnelllaufenden Mischer rückbefeuchtet und gekühlt werden.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 $g/cm^2$ (AUL0.3psi) durchläuft ein Maximum.

Zur Verbesserung der Anwendungseigenschaften, wie beispielsweise Permeabilität des gequollenen Gelbetts (SFC) in der Windel und Absorption unter einem Druck von 49.2 $g/cm^2$ (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49,2 $g/cm^2$ (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet und thermisch oberflächennachvernetzt. Dazu geeignete Vernetzer sind Verbindungen, die mit mindestens zwei Carboxylatgruppen der wasserabsorbierenden Polymerpartikel kovalente Bindungen bilden können.

Die wasserabsorbierenden Polymerpartikel weisen nach der thermischen Oberflächennachvernetzung oft einen Feuchtegehalt von weniger als 1 Gew.-% auf. Dadurch Erhöht sich die Neigung der Polymerpartikel zur statischen Aufladung. Die statische Aufladung der Polymerpartikel beeinflusst die Dosiergenauigkeit beispielsweise bei der Windelherstellung. Dieses Problem wird üblicherweise durch Einstellung eines definierten Feuchtegehalts durch Zusatz von Wasser oder wässrigen Lösungen gelöst (Rückbefeuchtung).

Verfahren zur Rückbefeuchtung werden beispielsweise in EP 0 780 424 A1, WO 98/49221 A1, WO 2004/037900 A1 und EP 1 462 473 A1 offenbart.

WO 2008/113790 A1 offenbart ein Verfahren zur Herstellung wasserabsorbierender Polymerpartikel durch Polymerisation einer Monomerlösung enthaltend ein ethylenisch ungesättigtes, säuregruppentragendes, teilweise neutralisiertes Monomer, umfassend Trocknung, Mahlung und Klassierung, wobei in einem Mischer nachvernetzte (wasserabsorbierende Polymerpartikel mit einer wässrigen Lösung besprüht werden. Die wasserabsorbierenden Polymerpartikel, die eine Temperatur von 40 °C bis 80 °C aufweisen werden im Horizontalmischer mit einer Geschwindigkeit bewegt, die einer Froude-Zahl von 0,01 bis 6 entspricht.

WO 2008/113788 A2 offenbart ein Verfahren zur Herstellung wasserabsorbierender Polymerpartikel durch Polymerisation einer Monomerlösung oder -suspension, enthaltend mindestens ein ethylenisch ungesättigtes, säuregruppentragendes Monomer, das zumindest teilweise neutralisiert sein kann, mindestens einen Vernetzer, umfassend Trocknung, Mahlung und Klassierung, wobei die wasserabsorbierenden Polymerpartikel in einem Horizontalmischer mit einer Geschwindigkeit bewegt werden, die einer Froude-Zahl von 0,01 bis 6 entspricht.

DE10249822 A1 offenbart ein Verfahren, in dem eine Nachbefeuchtung eines wasserabsorbierenden Polymerpartikels zur Herstellung eines klumpenfreien Materials führt. Das Nachbefeuchtungsverfahren weist einen ersten Mischvorgang, in dem die Bewegungsenergie der einzelnen Polymerteilchen im Mittel größer als die Haftungsenergie zwischen den einzelnen Polymerteilchen ist, und einen zweiten Mischvorgang, mit einer geringeren Geschwindigkeit als im ersten Mischvorgang, auf.

DE 10249821 A1 offenbart ein Verfahren zur Herstellung eines absorbierenden Polymerpartikels, in dem wasserabsorbierende Polymerpartikel in einem Mischer mit einem partikulären Feststoff beschichtet werden, um die Bildung von Agglomeraten zu vermeiden.

Aufgabe der vorliegenden Erfindung war die Bereitstellung eines verbesserten Verfahrens zur Rückbefeuchtung wasserabsorbierender Polymerpartikel, insbesondere mit verminderter Agglomerationsneigung.

Gelöst wurde die Aufgabe durch ein Verfahren zur Herstellung wasserabsorbierender Polymerpartikel durch Polymerisation einer Monomerlösung oder -suspension, enthaltend

1. a) mindestens ein ethylenisch ungesättigtes, säuregruppentragendes Monomer, das zumindest teilweise neutralisiert sein kann,

2. b) mindestens einen Vernetzer,

3. c) mindestens einen Initiator,

4. d) optional ein oder mehrere mit den unter a) genannten Monomeren copolymerisierbare ethylenisch ungesättigte Monomere und

e) optional ein oder mehrere wasserlösliche Polymere,

umfassend Trocknung, Mahlung, Klassierung, thermische Oberflächennachvernetzung und Rückbefeuchtung, dadurch gekennzeichnet, dass die Rückbefeuchtung im einem kontinuierlichen Horizontalmischer mit bewegten Mischwerkzeugen durchgeführt wird, wobei die Froude-Zahl mindestens 0,05 beträgt, die wasserabsorbierenden Polymerpartikel im Horizontalmischer eine Anfangstemperatur von mindestens 90°C aufweisen und die rückbefeuchteten wasserabsorbierenden Polymerpartikel im Horizontalmischer auf eine Temperatur von weniger als 80°C gekühlt werden, wobei die wasserabsorbierenden Polymerpartikel bei der Rückbefeuchtung im Horizontalmischer eine Anfangstemperatur von mindestens 95°C aufweisen.

Die Art der Kühlung unterliegt keiner Beschränkung. Beispielsweise kann der Horizontalmischer einen wassergekühlten Mantel aufweisen. Es ist auch möglich ein kaltes Gas, beispielsweise Luft oder Stickstoff, durchzuleiten oder mittels des zur Rückbefeuchtung verwendeten Wassers zu kühlen. Kombinationen mehrerer Maßnahmen sind bevorzugt.

Mischer mit rotierenden Mischwerkzeugen werden gemäß der Lage der Rotationsachse in Vertikalmischer und Horizontalmischer unterteilt.

Horizontalmischer im Sinne dieser Erfindung sind Mischer mit rotierenden Mischwerkzeugen deren Lage der Rotationsachse zur Produktstromrichtung um weniger als 20°, vorzugsweise um weniger als 15°, besonders bevorzugt um weniger als 10°, ganz besonders bevorzugt um weniger als 5°, von der Horizontalen abweicht.

Im erfindungsgemäßen Verfahren können alle dem Fachmann bekannten Horizontalmischer mit bewegten Mischwerkzeugen, wie Schneckenmischer, Scheibenmischer, Pflugscharmischer, Schaufelmischer, Schraubenbandmischer und Durchlaufmischer, eingesetzt werden. Ein bevorzugter Horizontalmischer ist der Scheibenmischer.

Die Innenwand des Mischers weist gegenüber Wasser einen Randwinkel von vorzugsweise weniger als 70°, besonders bevorzugt von weniger als 60°, ganz besonders bevorzugt von weniger als 50°, auf. Der Randwinkel ist ein Maß für das Benetzungsverhalten und wird gemäß DIN 53900 gemessen.

Vorteilhaft werden im erfindungsgemäßen Verfahren Mischer eingesetzt, deren produktberührte Innenwand aus einem nichtrostenden Stahl ist. Nichtrostende Stähle weisen üblicherweise einen Chromgehalt von 10,5 bis 13 Gew.-% Chrom auf. Der hohe Chromanteil führt zu einer schützenden Passivierung aus Chromdioxid an der Stahloberfläche. Weitere Legierungsbestandteile erhöhen die Korrosionsbeständigkeit und verbessern die mechanischen Eigenschaften.

Besonders geeignete Stähle sind austenitische Stähle mit beispielsweise mindestens 0,08 Gew.-% Kohlenstoff. Vorteilhaft enthalten die austenitischen Stähle neben Eisen, Kohlenstoff, Chrom, Nickel und optional Molybdän noch weitere Legierungsbestandteile, vorzugsweise Niob oder Titan.

Die bevorzugten nichtrostenden Stähle sind Stähle mit der Werkstoffnummer 1.43xx oder 1.45xx gemäß der DIN EN 10020, wobei xx eine natürliche Zahl zwischen 0 und 99 sein kann. Besonders bevorzugte Werkstoffe sind die Stähle mit den Werkstoffnummern 1.4301, 1.4541 und 1.4571, insbesondere Stahl mit der Werkstoffnummer 1.4301.

Vorteilhaft ist die produktberührte Innenwand des Mischers poliert. Polierte nichtrostende Stahloberflächen weisen eine niedrigere Rauhigkeit und einen niedrigeren Randwinkel gegenüber Wasser auf als matte oder aufgeraute Stahloberflächen.

Die Froude-Zahl ist wie folgt definiert:

$$Fr = \frac{\omega^2 r}{g}$$

mit

r:     Radius des Mischwerkzeugs

$\omega$:     Kreisfrequenz

g:     Erdbeschleunigung

Die Froude-Zahl beträgt mindestens 0,05, vorzugsweise von 0,1 bis 6, besonders bevorzugt von 0,12 bis 3, ganz besonders bevorzugt von 0,15 bis 1.

Die Temperatur der dem Horizontalmischer zugeführten wasserabsorbierenden Polymerpartikel (Anfangstemperatur) beträgt mindestens 90°C, vorzugsweise mindestens 95°C, besonders bevorzugt mindestens 100°C, ganz besonders bevorzugt mindestens 105°C. Bei zu hohen Temperaturen verdampft bereits merklich Wasser, so dass die Einsatzmenge an Wasser entsprechend erhöht werden muss.

**EP 2 550 316 B2**

Die wasserabsorbierenden Polymerpartikel werden im Horizontalmischer auf eine Temperatur von vorzugsweise weniger als 75°C, besonders bevorzugt weniger als 70°C, ganz besonders bevorzugt weniger als 65°C, gekühlt.

Durch die Rückbefeuchtung wird der Feuchtegehalt vorzugsweise um 1 bis 10 Gew.-%, besonders bevorzugt um 2 bis 8 Gew.-%, ganz besonders bevorzugt um 3 bis 5 Gew.-% erhöht. Durch die Rückbefeuchtung wird die mechanische Stabilität der Polymerpartikel erhöht und deren Neigung zur statischen Aufladung vermindert.

Die Umfangsgeschwindigkeit der Mischwerkzeuge beträgt vorzugsweise von 0,1 bis 10 m/s, besonders bevorzugt von 0,5 bis 5 m/s, ganz besonders bevorzugt von 0,75 bis 2,5 m/s.

Der Füllgrad des Horizontalmischers beträgt vorzugsweise von 30 bis 80%, besonders bevorzugt von 40 bis 75%, ganz besonders bevorzugt von 50 bis 70%.

Die Verweilzeit im Horizontalmischer beträgt vorzugsweise von 1 bis 180 Minuten, besonders bevorzugt von 2 bis 60 Minuten, ganz besonders bevorzugt von 5 bis 20 Minuten.

Die zur Rückbefeuchtung einsetzbaren wässrigen Flüssigkeiten, beispielsweise Wasser selber, unterliegen keiner Beschränkung.

Die wässrige Flüssigkeit wird vorzugsweise mittels einer Zweistoffdüse, besonders bevorzugt mittels einer innenmischenden Zweistoffdüse, aufgesprüht.

Zweistoffdüsen ermöglichen eine Zerstäubung in feine Tröpfchen bzw. einen Sprühnebel. Als Zerstäubungsform wird ein kreisförmiger oder auch elliptischer Voll- oder Hohlkegel ausgebildet. Zweistoffdüsen können außenmischend oder innenmischend gestaltet werden. Bei den außenmischenden Zweistoffdüsen verlassen Flüssigkeit und Zerstäubergas den Düsenkopf über separate Öffnungen. Sie werden erst nach dem Austritt aus der Sprühdüse im Sprühstrahl gemischt. Dies ermöglicht eine im weiten Bereich unabhängige Regelung von Tropfengrößenverteilung und Durchsatz. Der Sprühkegel der Sprühdüse kann über die Luftklappenstellung eingestellt werden. Bei der innenmischenden Zweistoffdüse werden Flüssigkeit und Zerstäubergas innerhalb der Sprühdüse vermischt und das Zweiphasengemisch verlässt den Düsenkopf über dieselbe Bohrung (bzw. über mehrere parallel geschaltete Bohrungen). Bei der innenmischenden Zweistoffdüse sind die Mengen- und Druckverhältnisse stärker gekoppelt als bei der außenmischenden Sprühdüse. Geringe Veränderungen im Durchsatz führen deshalb zur Änderung der Tropfengrößenverteilung. Die Anpassung an den gewünschten Durchsatz erfolgt über den gewählten Querschnitt der Düsenbohrung.

Als Zerstäubergas kommen Pressluft, Stickstoff oder Dampf von 0,5 bar und mehr in Frage. Die Tröpfchengröße kann individuell über das Verhältnis von Flüssigkeit zu Zerstäubergas sowie Gas- und Flüssigkeitsdruck eingestellt werden.

Der vorliegenden Erfindung liegt die Erkenntnis zugrunde, dass die Agglomerationsneigung wasserabsorbierender Polymerpartikel bei der Rückbefeuchtung sowohl von der Rührerdrehzahl als auch von der Kühlung der wasserabsorbierenden Polymerpartikel beeinflusst wird. Besonders wichtig ist aber eine ausreichend hohe Temperatur der wasserabsorbierenden Polymerpartikel unmittelbar vor der Rückbefeuchtung. Möglicherweise überwiegt die schnellere Diffusion in das Partikelinnere die bereits merkliche Verdampfung.

Im Folgenden wird die Herstellung der wasserabsorbierenden Polymerpartikel näher erläutert:
Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraallyloxyethan, Methylenbismethacrylamid, 15-fach ethoxyliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentions-kapazität (CRC) und die Absorption unter einem Druck von 21,0 $g/cm^2$ durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder - suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Zur Verbesserung der Trocknungseigenschaften kann das mittels eines Kneters erhaltene zerkleinerte Polymergel zusätzlich extrudiert werden.

Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur $T_g$ auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 μm, besonders bevorzugt von 250 bis 600 μm, ganz besonders von 300 bis 500 μm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 μm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Dies geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 $\mu$m, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von höchstens 600 $\mu$m, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel werden zur weiteren Verbesserung der Eigenschaften oberflächennachvernetzt. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidinon und dessen Derivate, wie 2-Hydroxyethyl-2-oxazolidinon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidinone, in DE 102 04 937 A1 zyklische Harnstoffe, in DE 103 34 584 A1 bizyklische Amidoacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyl-2-oxazolidinon, 2-Oxazolidinon und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat, Citrat und Lactat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet werden.

Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Feuchtegehalt gemäß der von der EDANA empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA empfohlenen Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 49,2 $g/cm^2$ von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 $g/cm^2$ der wasserabsorbierenden Polymerpartikel beträgt üblicherweise weniger als 35 g/g. Die Absorption unter einem Druck von 49,2 $g/cm^2$ wird analog der von der EDANA empfohlenen Testmethode Nr. WSP 242.2-05 "Absorption under Pressure" bestimmt, wobei statt eines Drucks von 21,0 $g/cm^2$ ein Druck von 49,2 $g/cm^2$ eingestellt wird.

**Methoden:**

Die Messungen sollten, wenn nicht anders angegeben, bei einer Umgebungstemperatur von 23 $\pm$ 2 °C und einer relativen Luftfeuchte von 50 $\pm$ 10 % durchgeführt werden. Die wasserabsorbierenden Polymerpartikel werden vor der Messung gut durchmischt.

**Flüssigkeitsweiterleitung (Saline Flow Conductivity)**

Die Flüssigkeitsweiterleitung (SFC) einer gequollenen Gelschicht unter Druckbelastung von 0,3 psi (2070 Pa) wird, wie in EP 0 640 330 A1 beschrieben, als Gel-Layer-Permeability einer gequollenen Gelschicht aus wasserabsorbierenden Polymerpartikeln bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1. Der Durchfluss wird automatisch erfasst.

Die Flüssigkeitsweiterleitung (SFC) wird wie folgt berechnet:

$$SFC\ [cm^3 s/g] = (Fg(t=0)xL0)/(dxAxWP),$$

wobei Fg(t=0) der Durchfluss an NaCl-Lösung in g/s ist, der anhand einer linearen Regressionsanalyse der Daten Fg(t) der Durchflussbestimmungen durch Extrapolation gegen t=0 erhalten wird, L0 die Dicke der Gelschicht in cm, d die Dichte der NaCl-Lösung in g/cm$^3$, A die Fläche der Gelschicht in cm$^2$ und WP der hydrostatische Druck über der Gelschicht in dyn/cm$^2$.

**Zentrifugenretentionskapazität (Centrifuge Retention Capacity)**

Die Zentrifugenretentionskapazität (CRC) der wasserabsorbierenden Polymerpartikel wird gemäß der von der EDANA empfohlenen Testmethode Nr. WSP 241.2-05 "Centrifuge Retention Capacity" bestimmt.

**Absorption unter einem Druck von 21,0 g/cm$^2$ (Absorption under Pressure)**

Die Absorption unter einem Druck von 21,0 g/cm$^2$ (AUL0.3psi) der wasserabsorbierenden Polymerpartikel wird gemäß der von der EDANA empfohlenen Testmethode Nr. WSP 242.2-05 "Absorption under Pressure" bestimmt.

**Absorption unter einem Druck von 63,0 g/cm$^2$ (Absorption under Pressure)**

Die Absorption unter einem Druck von 63,0 g/cm$^2$ (AUL0.9psi) der wasserabsorbierenden Polymerpartikel wird analog der von der EDANA empfohlenen Testmethode Nr. WSP 242.2-05 "Absorption under Pressure" bestimmt, wobei statt eines Drucks von 21,0 g/cm$^2$ (AUL0.3psi) ein Druck von 63,0 g/cm$^2$ (AUL0.9psi) eingestellt wird.

**Extrahierbare (Extractables)**

Der Anteil an Extrahierbaren der wasserabsorbierenden Polymerpartikel wird gemäß der von der EDANA empfohlenen Testmethode Nr. WSP 270.2-05 "Extractables" bestimmt.

Die EDANA-Testmethoden sind beispielsweise erhältlich bei der EDANA, Avenue Eugene Plasky 157, B-1030 Brüssel, Belgien.

**Beispiele**

**Herstellung der wasserabsorbierenden Polymerpartikel**

Durch kontinuierliches Mischen von entionisiertem Wasser, 50gew.-%iger Natronlauge und Acrylsäure wird eine Acrylsäure/Natriumacrylatlösung hergestellt, so dass der Neutralisationsgrad 65mol-% entsprach. Der Feststoffgehalt der Monomerlösung betrug 40 Gew.-%.

Als mehrfach ethylenisch ungesättigter Vernetzer wurde Polyethylenglykol-400-diacrylat (Diacrylat ausgehend von einem Polyethylenglykol mit einem mittleren Molgewicht von 400 g/mol) verwendet. Die Einsatzmenge betrug 1,35g pro kg Monomerlösung.

Zur Initiierung der radikalischen Polymerisation wurden pro kg Monomerlösung 5,11 g einer 0,33gew.-%igen wässrigen Wasserstoffperoxidlösung, 6,31 g einer 15gew.-%igen wässrigen Natriumperoxodisulfatlösung und 4,05 g einer 0,5gew.-%igen Ascorbinsäurelösung eingesetzt.

Der Durchsatz der Monomerlösung betrug 1200 kg/h. Die Reaktionslösung hatte am Zulauf eine Temperatur von 23,5°C.

Die einzelnen Komponenten wurden in folgenden Mengen kontinuierlich in einen Reaktor vom Typ List ORP 250 Contikneter, (LIST AG, Arisdorf, CH) dosiert:

| 1200 kg/h | Monomerlösung |
|---|---|
| 1,620 kg/h | Polyethylenglykol-400-diacrylat |
| 13,704 kg/h | Wasserstoffperoxidlösung/Natriumperoxodisulfat- Lösung |
| 4,860 kg/h | Ascorbinsäurelösung |

Zwischen dem Zugabepunkt für Vernetzer und den Zugabestellen für die Initiatoren wurde die Monomerlösung mit Stickstoff inertisiert.

Es fand nach ca. 50% der Verweilzeit zusätzlich eine Zudosierung von aus dem Herstellungsprozess durch Mahlung und Siebung anfallendem Feinkorn (45 kg/h) in den Reaktor statt. Die Verweilzeit der Reaktionsmischung im Reaktor betrug 15 Minuten.

Das erhaltene Polymergel wurde auf einen Bandtrockner aufgegeben. Auf dem Bandtrockner wurde das Polymergel kontinuierlich mit einem Luft/Gasgemisch umströmt und bei 175°C getrocknet. Die Verweilzeit im Bandtrockner betrug 43 Minuten.

Das getrocknete Polymergel wurde gemahlen und auf eine Partikelgrößenfraktion von 150 bis 850 $\mu$m abgesiebt. Das so erhaltene Grundpolymer hatte folgende Eigenschaften:

| CRC: | 32 g/g |
|---|---|
| AUL0.3psi: | 26 g/g |
| Extrahierbare: | 9,8 Gew.-% |

In einem Schugi Flexomix® vom Typ: FX 160 (Hosokawa-Micron B.V., Doetinchem, NL) wurde das Grundpolymer mit der Oberflächennachvernetzungslösung beschichtet und anschließend direkt in einem NARA-Paddle-Dryer vom Typ NPD 5W8 (GMF Gouda, Waddinxveen, NL) 45 Minuten bei 190°C getrocknet.

Es wurden folgende Mengen in den Schugi Flexomix® dosiert:

| 500 kg/h | Grundpolymer |
|---|---|
| 25,0 kg/h | Oberflächennachvernetzungslösung |

Die Oberflächennachvernetzungslösung enthielt 2.0 Gew.-% N-Hydroxyethyl-2-oxazolidinon, 97,5 Gew.-% entionisiertes Wasser und 0,5 Gew.-% Sorbitanmonococoat.

Die oberflächennachvernetzten Polymerpartikel wurden anschließend in einem NARA-Paddle-Cooler vom Typ NPD 3W9 (GMF Gouda, Waddinxveen, NL) auf ca. 60°C abgekühlt und anschließend noch einmal auf 150 bis 850 $\mu$m abgesiebt.

Die verwendeten oberflächennachvernetzten wasserabsorbierenden Polymerpartikel hatten folgendes Eigenschaftsprofil:

| CRC: | 26,5 g/g |
|---|---|
| AUL0.9psi: | 21 g/g |
| SFC: | $120 \times 10^{-7}$ cm$^3$s/g |
| Extrahierbare: | 7,8 Gew.-% |

**Beispiele 1 bis 7**

In einem beheizbaren Metallbehälter, mit einem Durchmesser und einer Gesamthöhe (incl. Deckel) von jeweils 15 cm und einem integrierten Ankerrührer mit einem Durchmesser von 13,5 cm, wurden jeweils 300 g wasserabsorbierende Polymerpartikel mit einer Rührgeschwindigkeit von 30 Umdrehungen pro Minute (Upm) auf die in der nachfolgenden Tabelle 1 angegebene Produkttemperatur erwärmt. Anschließend wurde innerhalb von ca. 0,5 Minuten mittels eines Zerstäubers jeweils 5,4 % $\pm$ 0,1 % Wasser aufgesprüht, wobei die Rührgeschwindigkeit auf 100 Upm eingestellt war.

Nach beendeter Wasserzugabe wurde die Rührgeschwindigkeit gemäß Tabelle 1 auf 20 bzw. 100 Upm eingestellt (entsprechend einer Froude-Zahl von 0,03 bzw. 0,75) und jeweils 30 Minuten bei der angegeben Rührgeschwindigkeit gerührt, wobei entweder die eingestellte Temperatur gehalten (entsprechend der Produkttemperatur, also "ohne Kühlung") oder mittels einer äußeren Luftkühlung ("mit Kühlung") die Temperatur abgesenkt wurde. Nach dieser Rührphase wurde der Inhalt des Metallbehälters jeweils in einen 1 Liter Glasbehälter umgefüllt, wobei die rückbefeuchteten wasserabsorbierende Polymerpartikel bei der Entnahme die angegebene Produkttemperatur besaßen und im verschlossenen Zustand 24 Stunden im Glasbehälter aufbewahrt wurden.

Zur Bestimmung des Agglomeratanteils wurde der Inhalt des Glasbehälters jeweils 5 Minuten auf einer Siebmaschine (Amplitude von 0,5 mm) klassiert. Die Ergebnisse sind in der Tabelle 2 zusammengefasst:

Tab. 1: Einstellungen

| Bs p. | Produkttemper atur [°C] | Wasserzuga be [g] | Wasserzuga be [%] | Rührerdrehz ahl [Upm] | mit bzw. ohne Luftkühlung | Temperat ur bei Entnahm e [°C] |
|---|---|---|---|---|---|---|
| 1*) | 95 | 16,0 | 5,3 | 20 | ohne | 95 |
| 2*) | 95 | 15,8 | 5,3 | 20 | Luftkühlu ng | 45 |
| 3*) | 95 | 16,3 | 5,4 | 100 | ohne | 95 |
| 4 | 95 | 16,2 | 5,4 | 100 | Luftkühlu ng | 43 |
| 5*) | 65 | 16,2 | 5,4 | 20 | Luftkühlu ng | 37 |
| 6*) | 65 | 16,2 | 5,4 | 100 | ohne | 65 |
| 7*) | 65 | 16,5 | 5,5 | 100 | Luftkühlu ng | 37 |
| *) | Vergleichsbeispiele | | | | | |

Tab. 2: Ergebnisse

| Bsp. | >1,6mm [g] | 1-1,6mm [g] | <1,0mm [g] | >1,6mm [%] | 1-1,6mm [%] | <1,0mm [%] | >1,0mm [%] |
|---|---|---|---|---|---|---|---|
| 1*) | 42,85 | 43,21 | 210,34 | 14,5 | 14,6 | 71,0 | 29,0 |
| 2*) | 31,78 | 33,30 | 236,17 | 10,5 | 11,1 | 78,4 | 21,6 |
| 3*) | 26,66 | 38,40 | 228,26 | 9,1 | 13,1 | 77,8 | 22,2 |
| 4 | 25,07 | 36,53 | 235,90 | 8,4 | 12,3 | 79,3 | 20,7 |
| 5*) | 62,61 | 87,10 | 154,01 | 20,6 | 28,7 | 50,7 | 49,3 |
| 6*) | 65,44 | 62,18 | 174,94 | 21,6 | 20,6 | 57,8 | 42,2 |
| 7*) | 86,72 | 76,85 | 144,05 | 28,2 | 25,0 | 46,8 | 53,2 |
| Bsp. | >1,6mm [g] | 1-1,6mm [g] | <1,0mm [g] | >1,6mm [%] | 1-1,6mm [%] | <1,0mm [%] | >1,0mm [%] |
| *) Vergleichsbeispiele | | | | | | | |

Die Gegenüberstellung der Beispiele 1 und 3 zeigt, dass bei hoher Temperatur (95°C) und hoher Rührgeschwindigkeit (100 Upm) nach einer 24-stündigen Lagerung weniger Agglomerate entstehen, als bei hoher Temperatur (95°C) und niedriger Rührgeschwindigkeit (20 Upm).

Die Gegenüberstellung der Beispiele 3 und 6 zeigt, dass bei hoher Rührgeschwindigkeit (100 Upm) und hoher Temperatur (95°C) nach einer 24-stündigen Lagerung weniger Agglomerate entstehen, als bei hoher Rührgeschwindigkeit (100 Upm) und niedriger Temperatur (65°C).

**Patentansprüche**

1.  Verfahren zur Herstellung wasserabsorbierender Polymerpartikel durch Polymerisation einer Monomerlösung oder -suspension, enthaltend

a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,

umfassend Trocknung, Mahlung, Klassierung, thermische Oberflächennachvernetzung und Rückbefeuchtung, **dadurch gekennzeichnet, dass** die Rückbefeuchtung im einem kontinuierlichen Horizontalmischer mit bewegten Mischwerkzeugen durchgeführt wird, wobei die Froude-Zahl mindestens 0,05 beträgt, die wasserabsorbierenden Polymerpartikel im Horizontalmischer eine Anfangstemperatur von mindestens 90°C aufweisen und die rückbefeuchteten wasserabsorbierenden Polymerpartikel im Horizontalmischer auf eine Temperatur von weniger als 80°C gekühlt werden, wobei die wasserabsorbierenden Polymerpartikel bei der Rückbefeuchtung im Horizontalmischer eine Anfangstemperatur von mindestens 95°C aufweisen.

2. Verfahren gemäß Anspruch 1, **dadurch gekennzeichnet, dass** der Feuchtegehalt der wasserabsorbierenden Polymerpartikel bei der Rückbefeuchtung um mindestens 1 Gew.-% erhöht wird.

3. Verfahren gemäß Anspruch 1 oder 2, **dadurch gekennzeichnet, dass** die wasserabsorbierenden Polymerpartikel bei der Rückbefeuchtung mit einer Geschwindigkeit bewegt werden, die einer Froude-Zahl von mindestens 0,15 entspricht

4. Verfahren gemäß einem der Ansprüche 1 bis 3, **dadurch gekennzeichnet, dass** die wasserabsorbierenden Polymerpartikel bei der Rückbefeuchtung im Horizontalmischer auf eine Temperatur von weniger als 70°C gekühlt werden.

5. Verfahren gemäß einem der Ansprüche 1 bis 4, **dadurch gekennzeichnet, dass** der Feuchtegehalt der wasserabsorbierenden Polymerpartikel bei der Rückbefeuchtung um mindestens 2 Gew.-% erhöht wird.

6. Verfahren gemäß einem der Ansprüche 1 bis 4, **dadurch gekennzeichnet, dass** die Verweilzeit bei der Rückbefeuchtung im Horizontalmischer von 1 bis 180 Minuten beträgt.

7. Verfahren gemäß einem der Ansprüche 1 bis 6, **dadurch gekennzeichnet, dass** das Monomer a) zu mindestens 50 mol-% teilweise neutralisierte Acrylsäure ist.

8. Verfahren gemäß einem der Ansprüche 1 bis 7, **dadurch gekennzeichnet, dass** das Monomer a) zu 25 bis 85 mol-% neutralisiert ist.

9. Verfahren gemäß einem der Ansprüche 1 bis 8, **dadurch gekennzeichnet, dass** die wasserabsorbierenden Polymerpartikel eine Zentrifugenretentionskapazität von mindestens 15 g/g aufweisen.

**Claims**

1. A process for producing water-absorbing polymer particles by polymerizing a monomer solution or suspension comprising

a) at least one ethylenically unsaturated monomer which bears acid groups and may be at least partly neutralized,
b) at least one crosslinker,
c) at least one initiator,
d) optionally one or more ethylenically unsaturated monomers copolymerizable with the monomers mentioned under a) and
e) optionally one or more water-soluble polymers,

comprising drying, grinding, classifying, thermal surface postcrosslinking and remoisturizing, which comprises performing the remoisturizing step in a continuous horizontal mixer with moving mixing tools, where the Froude number is at least 0.05, the water-absorbing polymer particles in the horizontal mixer have a starting temperature of at least 90°C, and the remoisturized water-absorbing polymer particles in the horizontal mixer are cooled to a temperature of less than 80°C, where the water-absorbing polymer particles in the remoisturizing step in the horizontal mixer have a starting temperature of at least 95°C.

2. The process according to claim 1, wherein the moisture content of the water-absorbing polymer particles is increased in the remoisturizing step by at least 1% by weight.

3. The process according to claim 1 or 2, wherein the water-absorbing polymer particles in the remoisturizing step are moved at a speed which corresponds to a Froude number of at least 0.15.

4. The process according to any of claims 1 to 3, wherein the water-absorbing polymer particles in the remoisturizing step in the horizontal mixer are cooled to a temperature of less than 70°C.

5. The process according to any of claims 1 to 4, wherein the moisture content of the water-absorbing polymer particles is increased in the remoisturizing step by at least 2% by weight.

6. The process according to any of claims 1 to 4, wherein the residence time in the remoisturizing step in the horizontal mixer is from 1 to 180 minutes.

7. The process according to any of claims 1 to 6, wherein the monomer a) is acrylic acid partly neutralized to an extent of at least 50 mol%.

8. The process according to any of claims 1 to 7, wherein the monomer a) has been neutralized to an extent of 25 to 85 mol%.

9. The process according to any of claims 1 to 8, wherein the water-absorbing polymer particles have a centrifuge retention capacity of at least 15 g/g.

**Revendications**

1. Procédé pour la production de particules de polymère absorbant l'eau, par polymérisation d'une solution ou suspension de monomères, contenant

   a) au moins un monomère à insaturation éthylénique, contenant des groupes acides, qui peut être au moins partiellement neutralisé,
   b) au moins un agent de réticulation,
   c) au moins un amorceur,
   d) en option un ou plusieurs monomères à insaturation éthylénique, copolymérisables avec les monomères nommés en a) et
   e) en option un ou plusieurs polymères hydrosolubles,

   comprenant séchage, broyage, classification, post-réticulation superficielle thermique et réhumectation, **caractérisé en ce qu'**on effectue la réhumectation dans un mélangeur horizontal continu à outils de mélange mobiles, le nombre de Froude étant d'au moins 0,05, les particules de polymère absorbant l'eau présentant dans le mélangeur horizontal une température initiale d'au moins 90 °C et les particules de polymère absorbant l'eau réhumectées étant refroidies jusqu'à une température de moins de 80 °C dans le mélangeur horizontal, lors de la réhumectation dans le mélangeur horizontal les particules de polymère absorbant l'eau présentant une température initiale d'au moins 95 °C.

2. Procédé selon la revendication 1, **caractérisé en ce que** la teneur en humidité des particules de polymères absorbant l'eau est augmentée d'au moins 1 % en poids lors de la réhumectation.

3. Procédé selon la revendication 1 ou 2, **caractérisé en ce que** les particules de polymère absorbant l'eau sont mises en mouvement lors de la réhumectation, à une vitesse qui correspond à un nombre de Froude d'au moins 0,15.

4. Procédé selon l'une quelconque des revendications 1 à 3, **caractérisé en ce que** lors de la réhumectation dans le mélangeur horizontal les particules de polymère absorbant l'eau sont refroidies jusqu'à une température de moins de 70 °C.

**5.** Procédé selon l'une quelconque des revendications 1 à 4, **caractérisé en ce que** lors de la réhumectation la teneur en humidité des particules de polymère absorbant l'eau est augmentée d'au moins 2 % en poids.

**6.** Procédé selon l'une quelconque des revendications 1 à 4, **caractérisé en ce que** lors de la réhumectation le temps de séjour dans le mélangeur horizontal va de 1 à 180 minutes.

**7.** Procédé selon l'une quelconque des revendications 1 à 6, **caractérisé en ce que** le monomère a) est à raison d'au moins 50 % en moles de l'acide acrylique partiellement neutralisé.

**8.** Procédé selon l'une quelconque des revendications 1 à 7, **caractérisé en ce que** le monomère a) est neutralisé à raison de 25 à 85 % en moles.

**9.** Procédé selon l'une quelconque des revendications 1 à 8, **caractérisé en ce que** les particules de polymère absorbant l'eau présentent une capacité de rétention centrifuge d'au moins 15 g/g.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0780424 A1
- WO 9849221 A1
- WO 2004037900 A1
- EP 1462473 A1
- WO 2008113790 A1
- WO 2008113788 A2
- DE 10249822 A1
- DE 10249821 A1
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1

- WO 2002032962 A2
- WO 2001038402 A1
- DE 3825366 A1
- US 6241928 B
- WO 2008040715 A2
- WO 2008052971 A1
- EP 0083022 A2
- EP 0543303 A1
- EP 0937736 A2
- DE 3314019 A1
- DE 3523617 A1
- EP 0450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 2003031482 A1
- DE 3713601 A1
- EP 0640330 A1

**In der Beschreibung aufgeführte Nicht-Patentliteratur**

- **F.L. BUCHHOLZ ; A.T. GRAHAM.** Modern Superabsorbent Polymer Technology. Wiley-VCH, 1998, 71-103